# EUROPEAN PATENT SPECIFICATION

(11) **EP 0 853 193 B1**
(45) Date of publication and mention of the grant of the patent: **14.06.2000**
(21) Application number: 97850167.4
(22) Date of filing: 04.12.1997
(51) Int. Cl.: F02M 31/20

(54) **Fuel oil cooler for dieselengines**
Kraftstoffkühler für Dieselbrennkraftmaschinen
Refroidisseur de carburant pour moteurs diesel

(30) Priority: 09.01.1997 SE 9700044
(43) Date of publication of application: 15.07.1998
(73) Proprietor: Tigerholm Innovation AB, 178 31 Ekerö (SE)
(72) Inventor: Tigerholm, Lars, 178 31 Ekerö (SE)

(56) References cited:
- GB-A- 218 268
- US-A- 3 506 192
- US-A- 3 835 822
- US-A- 5 438 962

## Description

In diesel engines, especially those used in motor boats, the relatively high temperature of the fuel upstream of the fuel injection pump often prevents the development of full engine power. One reason is that the high temperature of the diesel oil reduces the engine output per litre of fuel, another that the diesel oil is partly vaporised due to partial pressure and friction effects in the line between the tank and the injection pump. These problems can be overcome by installing a fuel oil cooler in the fuel line ahead of the fuel pump, while further improvement can be achieved by installing an oil deaerator upstream of the fuel oil cooler.

Those fuel oil coolers, which are available on the market are relatively complicated to install and require a separate, low-temperature cooling water supply, involving high cost. US-A-5438962 discloses a method of cooling fuel for petrol driven engines in motorboats, said method comprising the step of mounting a fuel cooler directly on the engines ordinary fuel pump in place of the ordinary pump cover. This method demands that a special water supply tube must be arranged to the fuel cooler from the ordinary cooling system of the engine and that an outlet tube for the cooling water also is required. However, diesel engines are normally equipped with a high- pressure injection pump for the fuel and this pump is not suitable to be equipped with the described cooling system. The low- pressure pump also normally installed in diesel engines, as a transport pump for the diesel fuel from the tank to the injection pump, is not made in a shape that allows the described installation of a cooling system.

The purpose of the present invention is increase the output of a diesel engine by providing a simple and easily installed fuel oil cooler in accordance with the invention, which cooler is mounted on the engine's existing sea water pump in place of the ordinary pump cover. The fuel oil cooler may suitably be made of a material, such as brass, with a high thermal conductivity, one part consisting of a cover mounted tightly against the sea water pump and the other of a cooler housing with internal cooling baffles forming a series of passages through which the fuel is made to flow. One of the short sides of the cooler housing is provided with two internally threaded holes for connecting the inlet and outlet fuel lines respectively. Both the cover and the cooler housing are provided with a number of clearance holes for the mounting screws used to mount the fuel oil cooler on the flange of the cooling water pump, the holes being located at the same pitch as the existing, threaded mounting holes in the said flange. The flow of fuel through the passages in the cooler housing gives rise to turbulence, ensuring efficient heat transfer between the fuel and the cooler, which is cooled by the water flow through the sea water pump.

An oil deaerator may suitably be installed between the fuel tank and the fuel oil cooler to further increase the output of the diesel engine. This has the advantages, firstly, that the fuel is free of air and entrained gases on admission to the injection pump and, secondly, that the return line between the injection pump and the tank can thereby be omitted.

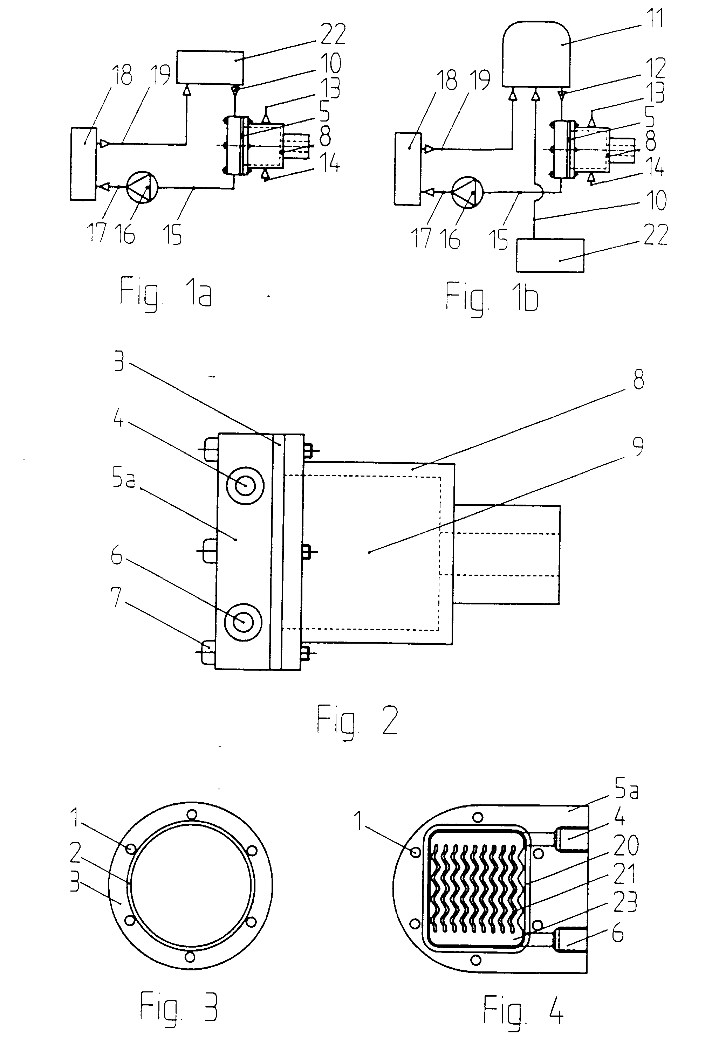

The invention will be described in further detail with the aid of the appended drawings, of which Fig. 1a is a schematic view of the fuel supply from the tank, through the fuel oil cooler to the fuel supply and injection pumps, and back to the tank. Fig. 1b is a similar schematic view in which an oil deaerator is also included in the circuit. Fig. 2 is an elevation view of a fuel oil cooler mounted on a sea water pump, while Figs. 3 and 4 are cross-sectional views of the fuel oil cooler cover and housing respectively.
In Fig. la, a fuel oil cooler 5 is mounted on a seawater pump 8 with a seawater inlet 14 and outlet 13. From the fuel tank 22, the fuel line 10 runs to the fuel oil cooler 5, from which the line 15 runs to the fuel supply pump 16, from which the line 17 is connected to the fuel injection pump 18, from which the return line 19 runs to the fuel tank. In Fig. 1b, the fuel line 10 runs from the fuel tank 22 to an oil deaerator 11, from which the line 12 is connected to the fuel oil cooler 5. In this case, the return line 19 from the fuel injection pump 18 is connected to the oil deaerator.

Fig. 2 shows the sea water pump 8 and its impeller chamber 9, with the cover 3 and cooler housing 5a of the oil cooler mounted on the sea water pump by means of mounting screws 7. Threaded holes for the fuel inlet 4 and outlet 6 connections respectively are shown in the end cover 5a of the cooler housing.

Fig. 3 is a cross-section of the cover 3 as viewed from the sea water pump, showing the clearance holes 1 for the mounting screws 7 and an annular groove 2 for an O-ring seal fitted to seal the cover against the flange of the sea water pump.

Fig. 4 is a cross-section of the cooler housing 5a as viewed from the cover 3, the housing cavity 23 being occupied by a series of corrugated cooling baffles 21 arranged in parallel at right-angles to the cover and spaced at equal intervals within the cavity. The end cover of the cooler housing is also provided with two internally threaded holes 4 and 6 for connecting the inlet and outlet fuel lines respectively. The holes 4 and 6 connect respectively with the corresponding sides of the rectangular cavity 23. The figure also shows the groove 20 provided for fitting an O-ring seal to seal the housing with the cover 3, as well as the clearance holes 1 for the mounting screws 7.

The invention is not limited to the embodiment shown, but allows for other possible designs of cooler housing. For example, the cooling baffles may be arranged parallel to the cover and/or be made as an integral part of the cover. Alternatively, the cooler housing and cover may be designed as a unit in the form of a metal plate provided with a series of drilled passages through which the fuel flows.

## Claims

1. Method of cooling fuel oil for a diesel engine installed primary in motor boats, the method comprising the step of mounting a fuel oil cooler (5) directly on an engine's ordinary impeller-type sea water pump (8) in place of the ordinary pump cover by means of mounting screws (7) inserted in the ordinary threaded holes of the pump.

2. Device for implementation of method in accordance with patent claim 1, **characterised in that** the fuel oil cooler (5) consists of a cover (3) and a cooler housing (5a) mounted on the engine's ordinary impeller-type sea water pump (8) in place of the ordinary pump cover by means of mounting screws (7) inserted in the ordinary threaded holes in the pump. The cooler housing is provided with a cavity (23) which is open to the cover (3) and is occupied by a series of corrugated cooling baffles (21) arranged in parallel at right-angles to the cover and spaced at equal intervals within the cavity. The cooler housing is further provided with two internally threaded holes (4) and (6) for connecting the inlet and outlet fuel lines respectively, arranged in the end cover of the cooler housing and connecting with the inside of the cavity (23) in the cooler housing (5a).

3. Device in accordance with patent claim 2, **characterised in that** the fuel oil cooler cover (3) is made of a material, such as brass, with a high thermal conductivity.

4. Device in accordance with patent claim 2, **characterised in that** the seals between the sea water pump (8), the cover (3) and the cooler housing (5a) consist of O-rings.

## Patentansprüche

1. Verfahren zur Kraftstoffölkühlung von Dieselmotoren, die vorzugsweise in Motorbooten angeordnet sind, wobei verfahrensgemäß eine Kraftstoffölkühlung (5) unmittelbar auf einer herkömmlichen Seewasserkreiselpumpe (8) einer Maschine anstelle der herkömmlichen Pumpenabdeckung mittels Montageschrauben (7) befestigt ist, die in herkömmlichen Gewindelöchern an der Pumpe angeordnet sind.

2. Vorrichtung zur Durchführung des Verfahrens nach Anspruch 1, **dadurch gekennzeichnet**, dass der Kraftstoffölkühler (5) eine Abdeckung (3) und ein Kühlergehäuse (5a) aufweist, die anstelle einer herkömmlichen Pumpenabdeckung auf einer herkömmlichen Seewasserkreiselpumpe (8) mittels Befestigungsschrauben (7) angeordenet sind, die in den herkömmlichen Gewindelöchern der Pumpe einsetzbar sind; das Kühlgehäuse weist eine Kavität (23) auf, die in Richtung der Abdeckung (3) offen ist und versehen ist mit einer Serie von Kühlrippen (21), die parallel im rechten Winkel zur Abdeckung und in gleichmäßigen Abständen innerhalb des Hohlraums angeordnet sind; das Kühlergehäuse ist ferner versehen mit zwei mit einem Innengewinde versehenen Löchern (4) und (6) zum Verbinden des Kraftstoffeinlaßes bzw. Kraftstoffauslaßes, die an der Endabdeckung des Kühlergehäuses angeordnet sind und in Verbindung stehen mit der Innenseite der Kavität (23) in dem Kühlergehäuse (5a).

3. Vorrichtung gemäß Anspruch 2, **dadurch gekennzeichnet**, daß die Abdeckung (3) der Kraftstoffölkühlung aus einem Material mit einer großen thermischen Leitfähigkeit, wie z. B. Messing gefertigt ist.

4. Verfahren gemäß Anspruch 2, **dadurch gekennzeichnet**, daß die Dichtungen zwischen der Seewasserpumpe (8), der Abdeckung (3) und dem Kühlergehäuse (5a) O-Ringe aufweisen.

## Revendications

1. Procédé de refroidissement de l'huile combustible d'un moteur diesel prévu principalement dans des bateaux à moteur, le procédé comprenant les étapes consistant à monter un refroidisseur d'huile combustible (5) directement sur une pompe à eau de mer du type à rotor ordinaire (8) du moteur à la place du couvercle de pompe ordinaire au moyen de vis de montage (7) insérées dans les trous filetés ordinaires de la pompe.

2. Dispositif pour la mise en oeuvre du procédé selon la revendication 1, **caractérisé** en ce que le refroidisseur d'huile combustible (5) se compose d'un couvercle (3) et d'un boîtier de refroidisseur (5a) montés sur la pompe à eau de mer du type à rotor ordinaire (8) du moteur à la place du couvercle de pompe ordinaire au moyen de vis de montage (7) insérés dans les trous filetés ordinaires de la pompe. Le boîtier de refroidisseur présente une cavité (23) qui est ouverte vers le couvercle (3) et est occupée par une série de déflecteurs de refroidissement ondulés (21) disposés parallèlement à angle droit par rapport au couvercle et espacés à des intervalles égaux à l'intérieur de la cavité. Le boîtier de refroidisseur présente en outre deux trous filetés intérieurement (4) et (6) pour relier respectivement les conduits d'entrée et de sortie de combustible, disposés dans le couvercle d'extrémité du boîtier de refroidisseur et se reliant à l'intérieur de la cavité (23) du boîtier de refroidisseur (5a).

3. Dispositif selon la revendication 2, **caractérisé** en ce que le couvercle du refroidisseur d'huile combustible est réalisé en une matière, telle que du laiton, présentant une comductibilité thermique élevée.

4. Dispositif selon la revendication 2, **caractérisé** en ce que les joints d'étanchéité entre la pompe à eau de mer (8), le couvercle (3) et le boîtier de refroidisseur (5a) se composent de joints toriques.
